# EUROPÄISCHE PATENTSCHRIFT

(11) **EP 4 422 842 B1**
(45) Veröffentlichungstag und Bekanntmachung des Hinweises auf die Patenterteilung: **18.06.2025**
(21) Anmeldenummer: 22809660.8
(22) Anmeldetag: 21.10.2022
(51) Int. Cl.: B29C 44/44, B29C 44/34

(54) **FORMWERKZEUG ZUR VERARBEITUNG VON KUNSTSTOFFPARTIKELMATERIAL ZUR HERSTELLUNG EINES PARTIKELSCHAUMFORMTEILS UND VERFAHREN**
MOULDING TOOL FOR PROCESSING PLASTIC PARTICLE MATERIAL FOR PRODUCING A PARTICLE FOAM MOULDED PART AND METHOD
MOULE POUR FAÇONNER UNE MATIÈRE PARTICULAIRE PLASTIQUE POUR FABRIQUER UNE PIÈCE MOULÉE EN MOUSSE PARTICULAIRE ET PROCÉDÉ ASSOCIÉ

(30) Priorität: 27.10.2021 DE 102021128028
(43) Veröffentlichungstag der Anmeldung: 04.09.2024
(73) Patentinhaber: FOX Velution GmbH, 91593 Burgbernheim (DE)
(72) Erfinder: VETTER, Jörg, 64839 Münster (Hessen) (DE); LUCHT, Mirjam, 91593 Burgbernheim (DE)
(74) Vertreter: Hafner & Kohl PartmbB
(86) Internationale Anmeldenummer: PCT/EP2022/079393
(87) Internationale Veröffentlichungsnummer: WO 2023/072757

(56) Entgegenhaltungen:
- EP-A1- 3 566 845
- EP-B1- 1 813 409
- DE-A1- 102016 014 065
- US-A1- 2020 060 383
- US-A1- 2021 101 321
- US-A1- 2021 206 037

## Beschreibung

Die Erfindung betrifft ein Formwerkzeug zur Verarbeitung von Kunststoffpartikelmaterial zur Herstellung eines Partikelschaumformteils, umfassend wenigstens einen durch wenigstens einen Formwerkzeugkörperwandungsabschnitt begrenzte Formwerkzeugkavität aufweisenden Formwerkzeugkörper sowie ein Verfahren zur Verarbeitung von Kunststoffpartikelmaterial zur Herstellung eines Partikelschaumformteils.

Entsprechende Formwerkzeuge zur Verarbeitung von Kunststoffpartikelmaterial zur Herstellung eines Partikelschaumformteils sowie entsprechende Verfahren sind aus dem Stand der Technik in einer Vielzahl an unterschiedlichen Ausführungen dem Grunde nach bekannt. Beispielsweise ist in der europäischen Patentanmeldung EP 3 393 743 A1 ein Formwerkzeug und ein Verfahren zur Herstellung eines Formkörpers aus einem Partikelschaummaterial beschrieben, bei welchem das Erwärmen des Formwerkzeugs nebst dem darin befindlichen granulatförmigen Kunststoffpartikelmaterial die Einbringung thermischer Energie in das Innere der dort als Formhohlraum bezeichneten Formwerkzeugkavität ausschließlich durch die die Formwerkzeugkavität begrenzenden Wandungen hindurch beinhaltet, wobei der Übergang der thermischen Energie von der jeweiligen Wandung in das Innere der Formwerkzeugkavität konvektionsfrei erfolgt, vorzugsweise durch Wärmeleitung und/oder Wärmestrahlung. Nachdem die Temperierung dort vollkommen frei von Zwangskonvektion und frei von jeglicher Medienzufuhr in das Innere der Formwerkzeugkavität erfolgt, ist insbesondere die Effizienz der Temperierung der Formwerkzeugkavität bei dem dort beschriebenen Prinzip verbesserungswürdig.

DE 10 2016 014 065 A1 offenbart eine Vorrichtung gemäß dem Oberbegriff des Anspruchs 1 und ein Verfahren zur Herstellung eines aus einem Partikelschaum bestehenden Formteils, wobei Kunststoff-Partikel in eine Formteilkavität eingebracht und dort unter Zuführung von Heißgas aufgeschäumt und/oder versintert werden. Der Erfindung liegt die Aufgabe zugrunde, ein demgegenüber verbessertes Formwerkzeug zur Verarbeitung von Kunststoffpartikelmaterial zur Herstellung eines Partikelschaumformteils sowie ein in entsprechender Weise verbessertes Verfahren anzugeben.

Die Aufgabe wird durch die Gegenstände der unabhängigen Ansprüche gelöst. Die Gegenstände der abhängigen Ansprüche betreffen hierzu mögliche Ausführungsformen.

Ein erster Aspekt der Erfindung betrifft ein Formwerkzeug zur Verarbeitung von Kunststoffpartikelmaterial zur Herstellung eines Partikelschaumformteils. Das Formwerkzeug ist entsprechend zur Verarbeitung von Kunststoffpartikelmaterial zur Herstellung eines Partikelschaumformteils eingerichtet.

Unter einem vermittels des Formwerkzeugs herstellbaren Partikelschaumformteil kann ein teilweise fertiggestelltes oder vollständig fertiggestelltes Produkt, d. h. ein Halb- oder Vollfabrikat, verstanden werden. Ein teilweise fertiggestelltes Produkt wird typischerweise wenigstens einem weiteren Be- oder Verarbeitungsschritt zugeführt. Ein vollständig fertiggestelltes Produkt wird typischerweise keinem weiteren Be- oder Verarbeitungsschritt zugeführt.

Unter einem vermittels des Formwerkzeugs verarbeitbaren Kunststoffpartikelmaterial kann grundsätzlich jedwedes expandierbare bzw. schäumbare Kunststoffpartikelmaterial und/oder (vor)expandierte bzw. (vor)geschäumte Kunststoffpartikelmaterial verstanden werden, welches sich zur Herstellung eines Partikelschaumformteils (weiter)verarbeiten lässt. Konkret kann es sich bei einem vermittels des Formwerkzeugs verarbeitbaren Kunststoffpartikelmaterial sonach z. B. um ein expandierbares oder (vor)expandiertes Polyamid, Polycarbonat, Polyethylen, Polypropylen, Polyphenylenether, Acrylnitril-Butadien-Styrol, Polystyrol oder einen Polymer-Blend handeln. Auch expandierbare bzw. (vor)expandierte Kunststoffpartikelmaterialien auf Basis von Biopolymeren sind denkbar.

Das vermittels des Formwerkzeugs verarbeitbare Kunststoffpartikelmaterial weist vor seiner Verarbeitung typischerweise eine partikuläre und zelluläre Struktur auf; das vermittels des Formwerkzeugs verarbeitbare Kunststoffpartikelmaterial liegt vor seiner Verarbeitung sonach typischerweise als Vielzahl an einzelnen, z. B. kugeligen, länglichen oder eckigen Kunststoffpartikelmaterialpartikeln vor. Die Kunststoffpartikelmaterialpartikel können grundsätzlich auch als Perlen bezeichnet oder erachtet werden.

Das Formwerkzeug umfasst einen Werkzeugkörper. Der Werkzeugkörper umfasst einen oder mehrere Formwerkzeugkörperwandungsabschnitte, welche(r) eine auch als Formhohlraum zu erachtende, mit Kunststoffpartikelmaterial befüllbare formgebende Formwerkzeugkavität begrenzt bzw. begrenzen. Entsprechende Formwerkzeugkörperwandungsabschnitte können jeweils eine eigene Wandung des Formwerkzeugkörpers oder einen Abschnitt einer solchen bilden können. Insbesondere können entsprechende Formwerkzeugkörperwandungsabschnitte jeweils eine eigene Formwerkzeughälfte oder einen Abschnitt einer solchen bilden.

Für eine Konfiguration des Formwerkzeugs mit mehreren Formwerkzeugkörperwandungsabschnitten gilt, dass wenigstens ein Formwerkzeugkörperwandungsabschnitt relativ zu wenigstens einem zweiten Formwerkzeugkörperwandungsabschnitt bewegbar gelagert sein kann. Derart können in an sich bekannter Weise Offen- und Schließstellungen des Formwerkzeugs realisiert werden. Konkret kann das Formwerkzeug sonach beispielsweise als so genanntes Tauchkantenwerkzeug ausgebildet sein, welches wenigstens einen mit einer Tauchkante ausgebildeten Formwerkzeugkörperwandungsabschnitt umfasst.

Das Formwerkzeug, d. h. insbesondere die Formwerkzeugkavität, ist im Rahmen des bestimmungsgemäßen Betriebs zu temperieren, d. h. insbesondere zu erwärmen, um ein Verbinden des vermittels wenigstens einer Befülleinrichtung über wenigstens eine, in allen Ausführungsformen grundsätzlich auch als Befülldüse bezeichenbare Befüllöffnung in die Formwerkzeugkavität gefüllten Kunststoffpartikelmaterials unter Ausbildung eines Partikelschaumformteils herbeizuführen. Zum Temperieren bzw. bzw. Erwärmen des Formwerkzeugs, d. h. insbesondere der Formwerkzeugkavität, umfasst das Formwerkzeug zwei im Hinblick auf Ihr Temperierprinzip verschiedene Temperiereinrichtungen zur Temperierung, d. h. insbesondere zur Erwärmung, der Formwerkzeugkavität, welche im Folgenden näher beschrieben sind.

Eine erste Temperiereinrichtung zur Temperierung der Formwerkzeugkavität ist eingerichtet, die zur Temperierung der Formwerkzeugkavität erforderliche thermische Energie (Wärme) in die Formwerkzeugkavität ausschließlich durch den wenigstens einen Formwerkzeugkörperwandungsabschnitt einzubringen. Die über die erste Temperiereinrichtung herbeiführbare Einbringung von thermischer Energie in die Formwerkzeugkavität und damit verbunden die über die erste Temperiereinrichtung herbeiführbare Erwärmung der Formwerkzeugkavität erfolgt sonach konvektionsfrei, d. h. insbesondere ausschließlich konvektionsfrei, und damit ohne Zuführung von Temperierfluiden in das Innere der Formwerkzeugkavität. Die über die erste Temperiereinrichtung herbeiführbare Erwärmung der Formwerkzeugkavität erfolgt sonach ohne Zwangskonvektion, was eine natürliche Konvektion, insbesondere zwischen den Partikeln des in die Formwerkzeugkavität gefüllten Kunststoffpartikelmaterials, innerhalb der Formwerkzeugkavität nicht ausschließt.

Die erste Temperiereinrichtung kann hierfür eine wenigstens einen Formwerkzeugkörperwandungsabschnitt, gegebenenfalls alle Formwerkzeugkörperwandungsabschnitte, in einer oder mehreren Raumrichtungen und/oder - ebenen durchsetzende Temperierstruktur umfassen, über welche der oder die Formwerkzeugkörperwandungsabschnitte temperierbar, d. h. insbesondere beheizbar, sind. Eine entsprechende Temperierstruktur kann z. B. elektrische Heizelemente, wie z. B. Widerstandsheizelemente, oder von einem Temperierfluid durchströmbare Strömungskanäle, welche jedoch keinen Austritt des Temperierfluids in die Formwerkzeugkavität ermöglichen, umfassen.

Eine zweite Temperiereinrichtung zur Temperierung der Formwerkzeugkavität ist eingerichtet, die zur Temperierung der Formwerkzeugkavität erforderliche thermische Energie in die Formwerkzeugkavität über ein durch über wenigstens eine, insbesondere unmittelbar in die Formwerkzeugkavität mündende, Strömungsöffnung in die Formwerkzeugkavität strömendes Temperierfluid einzubringen. Die über die zweite Temperiereinrichtung herbeiführbare Einbringung von thermischer Energie in die Formwerkzeugkavität und damit verbunden die über die zweite Temperiereinrichtung herbeiführbare Erwärmung der Formwerkzeugkavität erfolgt sonach (zwangs)konvektionsbasiert, d. h. insbesondere ausschließlich (zwangs)konvektionsbasiert, und damit auf Basis der Zuführung eines temperierbaren oder temperierten Temperierfluids, d. h. z. B. eines Gases und/oder einer Flüssigkeit, in das Innere der Formwerkzeugkavität. Die über die zweite Temperiereinrichtung herbeiführbare Erwärmung der Formwerkzeugkavität erfolgt sonach mit Zwangskonvektion, was wiederum eine zusätzliche natürliche Konvektion, insbesondere zwischen den Partikeln des in die Formwerkzeugkavität gefüllten Kunststoffpartikelmaterials, innerhalb der Formwerkzeugkavität nicht ausschließt. Das über die zweite Temperiereinrichtung in die Formwerkzeugkavität einbringbare Temperierfluid kann bzw. soll trocken sein, d. h. keinen oder einen marginalen Anteil an Feuchtigkeit aufweisen. Konkret kann es sich bei dem über die zweite Temperiereinrichtung in die Formwerkzeugkavität einbringbaren Temperierfluid sonach z. B. um ein heißes Gas, d. h. insbesondere heiße Luft, handeln.

Die zweite Temperiereinrichtung kann hierfür eine wenigstens eine Heizeinrichtung, d. h. z. B. eine elektrische Heizeinrichtung einen Wärmetauscher, etwa um elektrische Heizeinrichtungen zu vermeiden und/oder um thermische Energie beinhaltende und/oder führende oder Leitungen, Reservoirs, oder Abwärme von externen Geräten, wie z. B. von Temperiergeräten, zu nutzen, oder, welche(r) zum Beheizen eines über wenigstens eine Strömungsöffnung in die Formwerkzeugkavität einzubringenden Temperierfluids eingerichtet ist, und wenigstens eine Strömungserzeugungseinrichtung, d. h. z. B. eine Gebläse- und/oder Saugströmungserzeugungseinrichtung, wie z. B. eine Pumpeneinrichtung, welche zur Erzeugung einer Strömung des, gegebenenfalls vermittels der Heizeinrichtung beheizten, über die wenigstens eine Strömungsöffnung in die Formwerkzeugkavität einzubringenden Temperierfluids eingerichtet ist, umfassen. Der zweiten Temperiereinrichtung kann ferner eine z. B. als Reservoir ausgebildete, Bereitstellungseinrichtung zur Bereitstellung von Temperierfluid zugeordnet sein.

Die zweite Temperiereinrichtung kann durch das Zusammenwirken der Heizeinrichtung und der Strömungserzeugungseinrichtung sonach z. B. als Heißgebläseeinrichtung ausgebildet sein, über welche sich ein beheiztes Temperierfluid erzeugen und in die Formwerkzeugkavität einbringen lässt. Das Temperierfluid kann bzw. soll, wie erwähnt, trocken sein, d. h. keinen oder einen marginalen Anteil an Feuchtigkeit aufweisen.

Eine entsprechende Heizeinrichtung kann z. B. zum Beheizen eines Temperierfluids auf eine Temperatur oberhalb 25°C, insbesondere oberhalb 35°, weiter insbesondere oberhalb 45°C, weiter insbesondere oberhalb 55°C, weiter insbesondere oberhalb 65°C, weiter insbesondere oberhalb 75°C, weiter insbesondere oberhalb 85°C, weiter insbesondere oberhalb 95°C, weiter insbesondere oberhalb 105°C, weiter insbesondere oberhalb 115°C, weiter insbesondere oberhalb 125°C, weiter insbesondere oberhalb 135°C, weiter insbesondere oberhalb 145°C, weiter insbesondere oberhalb 155°C, weiter insbesondere oberhalb 165°C, weiter insbesondere oberhalb 175°C, weiter insbesondere oberhalb 185°C, weiter insbesondere oberhalb 195°C, eingerichtet sein. Die Heizeinrichtung ist typischerweise eingerichtet, das Temperierfluid so beheizen, dass diese eine ausreichende Menge an thermischer Energie enthält, welche ein Verbinden des Kunststoffpartikelmaterials unter Ausbildung eines Partikelschaumformteils zu ermöglichen oder zumindest zu begünstigen.

Das Temperieren bzw. Erwärmen des Formwerkzeugs, d. h. insbesondere der Formwerkzeugkavität, erfolgt im Gegensatz zu dem eingangs genannten Stand der Technik sonach nicht ausschließlich konvektionsfrei, sondern über die erste Temperiereinrichtung konvektionsfrei, weil ohne Einbringung von Temperierfluid in die Formwerkzeugkavität erfolgend, und über die zweite Temperiereinrichtung (zwangs)konvektionsbasiert, weil mit Einbringung von Temperierfluid in die Formwerkzeugkavität erfolgend, sodass insgesamt eine im Vergleich sehr effiziente Mischtemperierung des Formwerkzeugs, d. h. insbesondere der Formwerkzeugkavität, realisierbar ist.

Insbesondere ist über die zweite Temperiereinrichtung - wie sich im Weiteren ergibt - eine bedarfsweise und damit flexible, insbesondere zusätzliche, Temperierung möglich, als über die Eigenschaften des über die zweite Temperiereinrichtung in die Formwerkzeugkavität einbringbaren bzw. eingebrachten Temperierfluids, d. h. insbesondere dessen thermische Eigenschaften, wie z. B. dessen Temperatur, und/oder dessen Strömungseigenschaften, wie z. B. dessen Strömungsgeschwindigkeit, gezielt eine bestimmte Menge an thermischer Energie in die Formwerkzeugkavität einbringbar ist. Durch die im Weiteren beispielhaft näher erläuterte Anordnung jeweiliger Strömungsöffnungen kann gegebenenfalls sogar gezielt eine lokale Einbringung einer bestimmten Menge an thermischer Energie in die Formwerkzeugkavität realisiert werden.

Insgesamt liegt damit ein verbessertes Formwerkzeug zur Verarbeitung von Kunststoffpartikelmaterial zur Herstellung eines Partikelschaumformteils vor.

Der Betrieb der ersten und der zweiten Temperiereinrichtung kann grundsätzlich gleichzeitig, teilweise gleichzeitig oder zeitlich aufeinander folgend erfolgen. Mithin können die beiden Temperiereinrichtungen gleichzeitig in Betrieb und/oder außer Betrieb genommen werden, oder eine Temperiereinrichtung vor einer anderen Temperiereinrichtung in Betrieb genommen werden und/oder eine Temperiereinrichtung vor einer anderen Temperiereinrichtung außer Betrieb genommen werden.

Zur Steuerung des Betriebs der Temperiereinrichtungen kann diesen wenigstens eine hardware- und/oder softwaremäßig implementierte, mithin insbesondere computer-implementierte Steuereinrichtung zugeordnet sein, welche eingerichtet ist, Steuerinformationen zur Steuerung des Betriebs der Temperiereinrichtungen zu erzeugen.

Die wenigstens eine Steuereinrichtung kann gleichermaßen zur Steuerung der über die jeweiligen Temperiereinrichtungen jeweils in die Formwerkzeugkavität einbringbaren Menge an thermischer Energie (Wärmeenergie) eingerichtet sein. Dies kann z. B. über eine Steuerung der Leistungsaufnahme der jeweiligen Temperiereinrichtungen realisiert werden. Mithin kann sich aus der Summe der über die beiden Temperiereinrichtungen jeweils gesondert in die Formwerkzeugkavität einbringbaren Mengen an thermischer Energie eine Gesamtmenge wie auch eine Verteilung der in die Formwerkzeugkavität insgesamt einbringbaren thermischer Energie - diese reicht typischerweise aus, um ein gewünschtes Verbinden des Kunststoffpartikelmaterials unter Ausbildung eines Partikelschaumformteils zu ermöglichen - ergeben, welche über die wenigstens eine Steuereinrichtung, gegebenenfalls in-situ, insbesondere auf Basis von formwerkzeugseitig vorhandenen Sensoren gelieferten Sensordaten, gezielt eingestellt bzw. verändert werden kann.

Aus den vorstehenden Ausführungen ergibt sich, dass die über die erste Temperiereinrichtung in die Formwerkzeugkavität einbringbare Menge an thermischer Energie gleich oder ungleich zu der über die zweite Temperiereinrichtung in die Formwerkzeugkavität einbringbaren Menge an thermischer Energie sein kann und umgekehrt. Insbesondere kann die über die erste Temperiereinrichtung in die Formwerkzeugkavität einbringbare Menge an thermischer Energie (Wärmemenge) größer als die über die zweite Temperiereinrichtung in die Formwerkzeugkavität einbringbaren Menge an thermischer Energie sein oder umgekehrt. Beispielsweise kann die über die erste Temperiereinrichtung in die Formwerkzeugkavität einbringbare Menge an thermischer Energie (Wärmemenge) um Faktor 0,1, 0,2, 0,3, 0,4, 0,5, 0,6, 0,7, 0,8, 0,9, 1,0, 1,1, 1,2, 1,3, 1,4, 1,5, 1,6, 1,7, 1,8, 1,9, 2,0 oder mehr größer als die über die zweite Temperiereinrichtung in die Formwerkzeugkavität einbringbaren Menge an thermischer Energie sein oder umgekehrt.

Nachfolgend werden beispielhaft mögliche Ausführungsformen des Formwerkzeugs beschrieben, anhand welcher insbesondere denkbare Anordnungsmöglichkeiten der wenigstens einen Strömungsöffnung, welche in allen Ausführungsformen beispielsweise punkt- oder linienförmig ausgebildet sein kann, erkennbar sind:
Die wenigstens eine oder wenigstens eine Strömungsöffnung kann grundsätzlich z. B. in dem wenigstens einen Formwerkzeugkörperwandungsabschnitt angeordnet oder ausgebildet ist. Es ist möglich, dass mehrere Strömungsöffnungen, insbesondere gleichmäßig verteilt, in dem wenigstens einen Formwerkzeugkörperwandungsabschnitt angeordnet oder ausgebildet sind. Ebenso ist es möglich, dass in mehreren Formwerkzeugkörperwandungsabschnitten jeweils wenigstens eine Strömungsöffnung angeordnet oder ausgebildet ist, mithin mehrere Strömungsöffnungen über mehrere Formwerkzeugkörperwandungsabschnitte verteilt angeordnet oder ausgebildet sind. In allen Fällen kann die Anordnung einzelner, mehrerer oder sämtlicher Strömungsöffnungen gezielt gewählt sein, um, gegebenenfalls bedarfsweise, gezielt thermische Energie in die Formwerkzeugkavität einbringen zu können. Derart kann beispielsweise eine gegebenenfalls lokalisierte Einbringung von thermischer Energie in schwer zu temperierbare Bereiche, wie z. B. in dickwandigen und/oder befülleinrichtungsnahen Bereichen eines Partikelschaumformteils, eingebracht werden.

Konkret kann die wenigstens eine Strömungsöffnung oder wenigstens eine Strömungsöffnung z. B. in einer in dem wenigstens einen Formwerkzeugkörperwandungsabschnitt angeordneten oder ausgebildeten Entlüftungsöffnung zur Entlüftung der Formwerkzeugkavität angeordnet oder ausgebildet sein oder selbst wenigstens eine solche Entlüftungsöffnung bilden. Hierbei handelt es sich um eine hochintegrierte Möglichkeit der Anordnung oder Ausbildung einer entsprechenden Strömungsöffnung.

Erfindungsgemäß ist, gegebenenfalls ergänzend, die wenigstens eine Strömungsöffnung oder wenigstens eine Strömungsöffnung in einer in dem wenigstens einen Formwerkzeugkörperwandungsabschnitt angeordneten oder ausgebildeten Strömungskanalausgangsöffnung einer sich zumindest abschnittsweise an oder in dem wenigstens einen Formwerkzeugkörperwandungsabschnitt vorhandenen Strömungskanalstruktur angeordnet oder ausgebildet oder bildet selbst eine solche Strömungskanalausgangsöffnung. Hierbei handelt es sich ebenso um eine hochintegrierte Möglichkeit der Anordnung oder Ausbildung einer entsprechenden Strömungsöffnung.

Eine entsprechende von einem temperierbaren oder temperierten Temperierfluid durchströmbare Strömungskanalstruktur kann sich in wenigstens einer Raumrichtung und/oder - ebene durch den wenigstens einen Formwerkzeugkörperwandungsabschnitt erstrecken.

Das durch die Strömungskanalstruktur strömende Temperierfluid kann bereits vor Eintritt in die Strömungskanalstruktur, z. B. durch eine gegebenenfalls ebenso einen Bestandteil der Temperiereinrichtung bildende Heizeinrichtung, aktiv erwärmt (worden) sein und/oder während des Durchströmens der Strömungskanalstruktur durch einen Wärmeaustausch mit dem erwärmten Formwerkzeugkörperwandungsabschnitt, gegebenenfalls zusätzlich, passiv erwärmt werden. Die Strömungskanalstruktur ist sonach eingerichtet, ein diese zwischen einer Strömungskanaleingangsöffnung und einer Strömungskanalausgangsöffnungen durchströmendes Temperierfluid durch Wärmeübertragung, insbesondere konvektionsfrei, zu temperieren. Ein entsprechendes Temperierfluid lässt sich sonach durch entsprechende Wärmeübertragung insbesondere konvektionsfrei temperieren, die durch Temperierung in das Temperierfluid eingebrachte thermische Energie breitet sich in diesem jedoch typischerweise konvektiv aus. Bei einer entsprechenden Strömungskanalausgangsöffnung kann es sich, wie erwähnt, um eine entsprechende Strömungsöffnung handeln.

Weiter alternativ oder ergänzend kann die die wenigstens eine Strömungsöffnung oder wenigstens eine Strömungsöffnung in einem sich von wenigstens einem Formwerkzeugkörperwandungsabschnitt abragend in die Formwerkzeugkavität, insbesondere fingerartig bzw. -förmig, erstreckend angeordneten oder ausgebildeten Energieführungselement angeordnet oder ausgebildet sein. Hierbei handelt es sich ebenso um eine hochintegrierte Möglichkeit der Anordnung oder Ausbildung einer entsprechenden Strömungsöffnung.

Ein entsprechendes Energieführungselement kann im Bereich eines in die Formwerkzeugkavität ragenden Abschnitts wenigstens eine, insbesondere mit einem kanalartigen bzw. -förmigen Innenraum des Energieführungselements kommunizierende, Austrittsöffnung aufweisen, über welche ein Temperierfluid über das Energieführungselement in die Formwerkzeugkavität einbringbar ist. Bei einer entsprechenden Austrittsöffnung kann es sich insbesondere um eine entsprechende Strömungsöffnung handeln.

Weiter alternativ oder ergänzend kann die wenigstens eine Strömungsöffnung oder wenigstens eine Strömungsöffnung in einer in dem wenigstens einen Formwerkzeugkörperwandungsabschnitt angeordneten oder ausgebildeten Befüllöffnung zur Befüllung der Formwerkzeugkavität mit Kunststoffpartikelmaterial angeordnet oder ausgebildet ist oder selbst eine solche Befüllöffnung bilden. Hierbei handelt es sich ebenso um eine hochintegrierte Möglichkeit der Anordnung oder Ausbildung einer entsprechenden Strömungsöffnung.

Die zweite Temperiereinrichtung kann sonach einer Befülleinrichtung des Formwerkzeugs zugeordnet sein, welche zur Befüllung der Formwerkzeugkavität mit vermittels des Formwerkzeugs zu verarbeitendem Kunststoffpartikelmaterial eingerichtet ist. Die Befülleinrichtung kann wenigstens einen von einer Befüllströmung durchströmbaren, mit der wenigstens einen Befüllöffnung kommunizierenden Befüllkanal aufweisen. Die zweite Temperiereinrichtung kann eingerichtet sein, das Temperierfluid über wenigstens einen mit dem wenigstens einen Befüllkanal kommunizierenden, gegebenenfalls flanschartigen bzw. - förmigen, Zuströmanschluss in den wenigstens einen Befüllkanal einzubringen. Der wenigstens eine Zuströmanschluss kann winklig, insbesondere spitz- oder stumpfwinklig, relativ zu einer durch den wenigstens einen Befüllkanal definierten Befüllkanalachse angeordnet oder ausgerichtet sein und direkt oder indirekt mit dem wenigstens einen Befüllkanal kommunizieren, sodass ein Temperierfluid über den wenigstens einen Zuströmanschluss in den wenigstens einen Befüllkanal und weiter über die wenigstens eine Befüllöffnung, welche, wie erwähnt, eine Strömungsöffnung bilden kann, in die Formwerkzeugkavität strömen kann.

Die Befülleinrichtung kann wenigstens einen, insbesondere reversibel, zwischen wenigstens einer Offenstellung, in welcher ein Austritt von Kunststoffpartikelmaterial aus dem Befüllkanal und damit ein Befüllen der Formwerkzeugkavität mit Kunststoffpartikelmaterial möglich ist, und wenigstens einer Verschlussstellung, in welcher ein Austritt von Kunststoffpartikelmaterial aus dem Befüllkanal und damit ein Befüllen der Formwerkzeugkavität nicht möglich ist, insbesondere axial bezüglich einer Zentralachse eines Gehäuses der Befülleinrichtung, bewegbar gelagerter Verschlusskörper umfassen. Dem wenigstens einen Verschlusskörper kann ein, z. B. motorischer, hydraulischer oder pneumatischer, Antrieb zugeordnet sein, über welchen sich eine den wenigstens einen Verschlusskörper in eine Bewegung versetzende Antriebskraft erzeugen lässt.

Der wenigstens eine Verschlusskörper kann in allen Ausführungsformen einen Grundabschnitt mit einer zylinderartigen bzw. -förmigen, weiter insbesondere hohlzylinderartigen bzw. - förmigen, mithin pinolenartigen bzw. -förmigen, Grundform aufweisen.

Der wenigstens eine Verschlusskörper kann grundsätzlich unabhängig von seiner konkreten geometrisch-konstruktiven Gestaltung mit einer von dem Temperierfluid durchströmbaren Strömungskanalstruktur ausgebildet sein bzw. eine solche umfassen. Eine entsprechende verschlusskörperseitige Strömungskanalstruktur kann z. B. durch äußere freiliegende oder innere nicht freiliegende Ausnehmungen, Bohrungen, Nuten, etc. in dem Grundabschnitt des Verschlusskörpers angeordnet oder ausgebildet sein. Mithin kann die Strömungskanalstruktur zumindest abschnittsweise im Außenumfang eines Grundabschnitts des Verschlusskörpers ausgebildet sein, und/oder die Strömungskanalstruktur den Verschlusskörper zumindest abschnittsweise, insbesondere in axialer Richtung bezüglich einer Längsachse des Grundabschnitts des Verschlusskörpers, durchsetzend innerhalb eines Grundabschnitts des Verschlusskörpers ausgebildet ist.

Eine entsprechende verschlusskörperseitige Strömungskanalstruktur mündet in allen Ausführungsformen typischerweise in einem einer Befüllöffnung zugewandten freien Ende des Verschlusskörpers, was nach Austritt eines Temperierfluids aus der Strömungskanalstruktur ein Zuführen des Temperierfluids über die Befüllöffnung in die Formwerkzeugkavität ermöglicht.

Durch die Möglichkeit der Einbringung eines Temperierfluids in die Formwerkzeugkavität über wenigstens eine entsprechende Befüllöffnung ist es in allen entsprechenden Ausführungsformen gegebenenfalls möglich, etwaige Defekte, Inhomogenitäten, etc. in dem der Befüllöffnung zugewandten Bereich eines vermittels des Formwerkzeugs hergestellten Partikelschaumformteils zu reduzieren bzw. zu vermeiden, als in diesem Bereich durch Zwangskonvektion gezielt thermische Energie eingebracht werden kann. Derart können z. B. lokale Ableitungseffekte konduktiver Art kompensiert werden.

Ein zweiter Aspekt der Erfindung betrifft eine Vorrichtung zur Verarbeitung von Kunststoffpartikelmaterial zur Herstellung eines Partikelschaumformteils. Die Vorrichtung umfasst wenigstens ein Formwerkzeug gemäß dem ersten Aspekt der Erfindung. Mithin gelten sämtliche Ausführungsformen im Zusammenhang mit dem Formwerkzeug gemäß dem ersten Aspekt der Erfindung analog für die Vorrichtung gemäß dem zweiten Aspekt der Erfindung und umgekehrt. Die Vorrichtung kann dem Formwerkzeug übergeordnete funktionelle und/oder konstruktive Einrichtungen, wie z. B. ein Anlagengestell zur Lagerung des Formwerkzeugs, eine Versorgungseinrichtung zur Versorgung des Formwerkzeugs mit einem oder mehreren Energieträgern, etc. umfassen.

Ein dritter Aspekt der Erfindung betrifft ein Verfahren zur Verarbeitung von Kunststoffpartikelmaterial zur Herstellung eines Partikelschaumformteils. Das Verfahren zeichnet sich dadurch aus, dass zur Temperierung einer Formwerkzeugkavität eine erste Temperiereinrichtung verwendet wird, welche eingerichtet ist, die zur Temperierung der Formwerkzeugkavität erforderliche thermische Energie in die Formwerkzeugkavität ausschließlich durch den wenigstens einen Werkzeugkörperwandungsabschnitt einzubringen; und zudem eine zweite Temperiereinrichtung zur Temperierung der Formwerkzeugkavität verwendet wird, welche eingerichtet ist, die zur Temperierung der Formwerkzeugkavität erforderliche thermische Energie in die Formwerkzeugkavität über ein durch über wenigstens eine Strömungsöffnung in die Formwerkzeugkavität strömendes Temperierfluid einzubringen.

Zur Durchführung des Verfahrens kann insbesondere ein Formwerkzeug gemäß dem ersten Aspekt oder eine Vorrichtung gemäß dem zweiten Aspekt der Erfindung verwendet werden. Mithin gelten sämtliche Ausführungsformen im Zusammenhang mit dem Formwerkzeug gemäß dem ersten Aspekt der Erfindung und mit der Vorrichtung gemäß dem zweiten Aspekt der Erfindung analog für das Verfahren gemäß dem dritten Aspekt der Erfindung und umgekehrt.

Die Erfindung ist anhand von Ausführungsbeispielen in den Zeichnungen nochmals erläutert. Dabei zeigt:
Fig. 1 - 4 jeweils eine Prinzipdarstellung eines Formwerkzeugs gemäß einem Ausführungsbeispiel, wobei Fig. 2 ein erfindungsgemäßes Ausführungsbeispiel darstellt; und
Fig. 5 eine Prinzipdarstellung einer Befülleinrichtung eines Formwerkzeugs gemäß einem Ausführungsbeispiel.

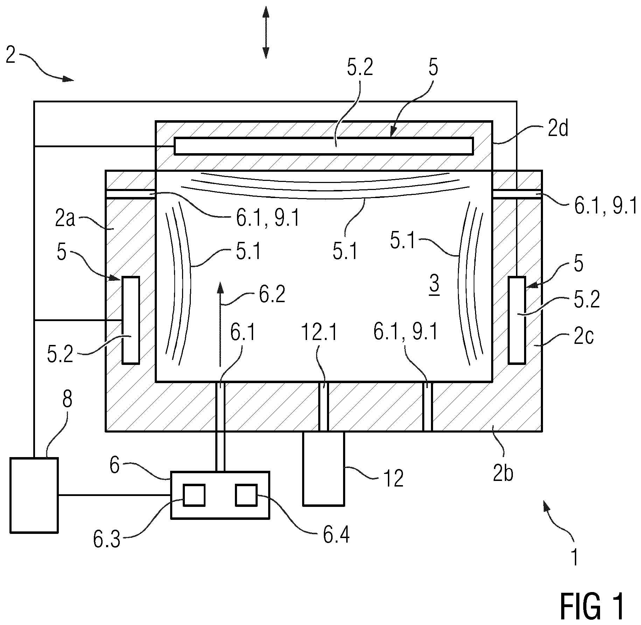

Fig. 1 zeigt eine Prinzipdarstellung eines Formwerkzeugs 1 zur Verarbeitung von Kunststoffpartikelmaterial zur Herstellung eines Partikelschaumformteils (nicht gezeigt) gemäß einem ersten Ausführungsbeispiel.

Unter einem vermittels des Formwerkzeugs 1 herstellbaren Partikelschaumformteil kann ein teilweise fertiggestelltes oder vollständig fertiggestelltes Produkt, d. h. ein Halb- oder Vollfabrikat, verstanden werden. Ein teilweise fertiggestelltes Produkt wird typischerweise wenigstens einem weiteren Be- oder Verarbeitungsschritt zugeführt. Ein vollständig fertiggestelltes Produkt wird typischerweise keinem weiteren Be- oder Verarbeitungsschritt zugeführt.

Unter einem vermittels des Formwerkzeugs 1 verarbeitbaren Kunststoffpartikelmaterial kann grundsätzlich jedwedes expandierbare bzw. schäumbare Kunststoffpartikelmaterial und/oder (vor)expandierte bzw. (vor)geschäumte Kunststoffpartikelmaterial verstanden werden, welches sich zur Herstellung eines Partikelschaumformteils (weiter)verarbeiten lässt. Konkret kann es sich bei einem vermittels des Formwerkzeugs 1 verarbeitbaren Kunststoffpartikelmaterial sonach z. B. um ein expandierbares oder (vor)expandiertes Polyamid, Polycarbonat, Polyethylen, Polypropylen, Polyphenylenether, Acrylnitril-Butadien-Styrol, Polystyrol oder einen Polymer- Blend handeln. Auch expandierbare bzw. (vor)expandierte Kunststoffpartikelmaterialien auf Basis von Biopolymeren sind denkbar.

Das vermittels des Formwerkzeugs 1 verarbeitbare Kunststoffpartikelmaterial weist vor seiner Verarbeitung typischerweise eine partikuläre und zelluläre Struktur auf; das vermittels des Formwerkzeugs 1 verarbeitbare Kunststoffpartikelmaterial liegt vor seiner Verarbeitung sonach typischerweise als Vielzahl an einzelnen, z. B. kugeligen, länglichen oder eckigen Kunststoffpartikelmaterialpartikeln vor. Die Kunststoffpartikelmaterialpartikel können grundsätzlich auch als Perlen bezeichnet oder erachtet werden.

Das Formwerkzeug 1 umfasst einen Werkzeugkörper 2. Der Werkzeugkörper 2 umfasst in den in den Fig. gezeigten Ausführungsbeispielen mehrere Formwerkzeugkörperwandungsabschnitte 2a - 2d, welche eine auch als Formhohlraum zu erachtende, mit Kunststoffpartikelmaterial befüllbare formgebende Formwerkzeugkavität 3 begrenzen.

Konkret handelt es sich bei den Formwerkzeugkörperwandungsabschnitten 2a, 2b in den in den Fig. gezeigten Ausführungsbeispielen jeweils um eine die Formwerkzeugkavität 3 seitlich begrenzende Seitenwandung, bei dem Formwerkzeugkörperwandungsabschnitt 2c um eine die Formwerkzeugkavität 3 bodenseitig begrenzende Bodenwandung und bei dem Formwerkzeugkörperwandungsabschnitt 2d um eine die Formwerkzeugkavität 3 deckenseitig begrenzende Deckenwandung.

Ersichtlich können die Formwerkzeugkörperwandungsabschnitte 2a - 2d jeweils eine eigene Wandung des Formwerkzeugkörpers 2 oder einen Abschnitt einer solchen bilden. Insbesondere können einzelne oder mehrere Formwerkzeugkörperwandungsabschnitte 2a - 2d jeweils eine eigene Formwerkzeughälfte oder einen Abschnitt einer solchen bilden. In den in den Fig. gezeigten Ausführungsbeispielen bilden die Formwerkzeugkörperwandungsabschnitte 2a - 2c beispielsweise eine erste Formwerkzeughälfte und der Formwerkzeugkörperwandungsabschnitt 2d eine zweite Formwerkzeughälfte.

Für die in den Fig. gezeigte Konfiguration des Formwerkzeugs 1 mit mehreren Formwerkzeugkörperwandungsabschnitten 2a - 2d gilt, dass wenigstens ein Formwerkzeugkörperwandungsabschnitt 2d relativ zu wenigstens einem anderen Formwerkzeugkörperwandungsabschnitt 2a - 2c bewegbar gelagert sein kann. In den in den Fig. gezeigten Ausführungsbeispielen ist, wie durch den Doppelpfeil angedeutet, beispielhaft der die zweite Formwerkzeughälfte bildende Formwerkzeugkörperwandungsabschnitt 2d relativ zu den die erste Formwerkzeughälfte bildenden Formwerkzeugkörperwandungsabschnitten 2a - 2c bewegbar gelagert. Derart können in an sich bekannter Weise Offen- und Schließstellungen des Formwerkzeugs 1 realisiert werden. Konkret kann das Formwerkzeug 1 sonach beispielsweise als Tauchkantenwerkzeug ausgebildet sein, welches wenigstens einen mit einer Tauchkante ausgebildeten Formwerkzeugkörperwandungsabschnitt 2a - 2d umfasst.

Das Formwerkzeug 1, d. h. insbesondere die Formwerkzeugkavität 3, ist im Rahmen des bestimmungsgemäßen Betriebs zu temperieren, d. h. insbesondere zu erwärmen, um ein Verbinden des vermittels einer Befülleinrichtung 12 über eine auch als Befülldüse bezeichenbare Befüllöffnung 12.1 in die Formwerkzeugkavität 3 gefüllten Kunststoffpartikelmaterials unter Ausbildung eines Partikelschaumformteils herbeizuführen. Zum Temperieren bzw. bzw. Erwärmen des Formwerkzeugs 1, d. h. insbesondere der Formwerkzeugkavität 3, umfasst das Formwerkzeug 1 zwei im Hinblick auf Ihr Temperierprinzip verschiedene Temperiereinrichtungen 5, 6 zur Temperierung, d. h. insbesondere zur Erwärmung, der Formwerkzeugkavität 3, welche im Folgenden näher beschrieben sind.

Eine erste Temperiereinrichtung 5 ist eingerichtet, die zur Temperierung der Formwerkzeugkavität 3 erforderliche thermische Energie 5.1 (Wärme) in die Formwerkzeugkavität 3 ausschließlich durch einen oder mehrere Formwerkzeugkörperwandungsabschnitte 2a - 2d einzubringen. Die über die erste Temperiereinrichtung 5 herbeiführbare Einbringung von thermischer Energie in die Formwerkzeugkavität 3 und damit verbunden die über die erste Temperiereinrichtung 5 herbeiführbare Erwärmung der Formwerkzeugkavität 3 erfolgt sonach ausschließlich konvektionsfrei und damit ohne Zuführung von Temperierfluiden in die Formwerkzeugkavität 3 bzw. in das Innere der Formwerkzeugkavität 3. Die über die erste Temperiereinrichtung 5 herbeiführbare Erwärmung der Formwerkzeugkavität 3 erfolgt sonach ohne Zwangskonvektion, was eine natürliche Konvektion, insbesondere zwischen den Partikeln des in die Formwerkzeugkavität 3 gefüllten Kunststoffpartikelmaterials, innerhalb der Formwerkzeugkavität 3 nicht ausschließt.

Wie in den Fig. beispielhaft angedeutet, kann die erste Temperiereinrichtung 5 hierfür eine wenigstens einen Formwerkzeugkörperwandungsabschnitt 2a - 2d, gegebenenfalls alle Formwerkzeugkörperwandungsabschnitte 2a - 2d, in einer oder mehreren Raumrichtungen und/oder -ebenen durchsetzende Temperierstruktur 5.2 umfassen, über welche der oder die Formwerkzeugkörperwandungsabschnitte 2a - 2d temperierbar, d. h. insbesondere beheizbar, sind. Eine entsprechende Temperierstruktur 5.2 kann z. B. elektrische Heizelemente, wie z. B. Widerstandsheizelemente, oder von einem Temperierfluid durchströmbare Strömungskanäle, welche jedoch keinen Austritt des Temperierfluids in die Formwerkzeugkavität 3 ermöglichen, umfassen.

Eine zweite Temperiereinrichtung 6 ist eingerichtet, die zur Temperierung der Formwerkzeugkavität 3 erforderliche thermische Energie in die Formwerkzeugkavität 3 über ein durch über wenigstens eine, insbesondere unmittelbar in die Formwerkzeugkavität 3 mündende, Strömungsöffnung 6.1 in die Formwerkzeugkavität 3 strömendes Temperierfluid 6.2 einzubringen. Die über die zweite Temperiereinrichtung 6 herbeiführbare Einbringung von thermischer Energie in die Formwerkzeugkavität 3 und damit verbunden die über die zweite Temperiereinrichtung 6 herbeiführbare Erwärmung der Formwerkzeugkavität 3 erfolgt sonach ausschließlich (zwangs)konvektionsbasiert und damit auf Basis der Zuführung eines temperierbaren oder temperierten Temperierfluids 6.2, d. h. z. B. eines Gases und/oder einer Flüssigkeit, in die Formwerkzeugkavität 3 bzw. in das Innere der Formwerkzeugkavität 3. Die über die zweite Temperiereinrichtung 6 herbeiführbare Erwärmung der Formwerkzeugkavität 3 erfolgt sonach mit Zwangskonvektion, was wiederum eine zusätzliche natürliche Konvektion, insbesondere zwischen den Partikeln des in die Formwerkzeugkavität 3 gefüllten Kunststoffpartikelmaterials, innerhalb der Formwerkzeugkavität 3 nicht ausschließt.

Wie in den Fig. beispielhaft angedeutet, kann die zweite Temperiereinrichtung 6 hierfür eine wenigstens eine Heizeinrichtung 6.3, d. h. z. B. eine elektrische Heizeinrichtung oder einen Wärmetauscher, welche(r) zum Beheizen eines über wenigstens eine Strömungsöffnung 6.1 in die Formwerkzeugkavität 3 einzubringenden Temperierfluids 6.2 eingerichtet ist, und wenigstens eine Strömungserzeugungseinrichtung 6.4, d. h. z. B. eine Gebläse- und/oder Saugströmungserzeugungseinrichtung, wie z. B. eine Pumpeneinrichtung, welche zur Erzeugung einer Strömung des, gegebenenfalls vermittels der Heizeinrichtung 6.3 beheizten, über die wenigstens eine Strömungsöffnung 6.1 in die Formwerkzeugkavität 3 einzubringenden Temperierfluids 6.2 eingerichtet ist, umfassen. Der zweiten Temperiereinrichtung 6 kann ferner eine z. B. als Reservoir ausgebildete, Bereitstellungseinrichtung zur Bereitstellung von Temperierfluid 6.2 zugeordnet sein.

Die zweite Temperiereinrichtung 6 kann durch das Zusammenwirken der Heizeinrichtung 6.3 und der Strömungserzeugungseinrichtung 6.4 sonach z. B. als Heißgebläseeinrichtung ausgebildet sein, über welche sich ein beheiztes Temperierfluid 6.2 erzeugen und in die Formwerkzeugkavität 3 einbringen lässt. Das Temperierfluid 6.2 kann, wie erwähnt, trocken sein, d. h. keinen oder einen marginalen Anteil an Feuchtigkeit aufweisen.

Das Temperieren bzw. Erwärmen des Formwerkzeugs 1, d. h. insbesondere der Formwerkzeugkavität 3, erfolgt im Gegensatz zu dem eingangs genannten Stand der Technik sonach nicht ausschließlich konvektionsfrei, sondern über die erste Temperiereinrichtung 5 konvektionsfrei, weil ohne Einbringung von Temperierfluid in die Formwerkzeugkavität 3 erfolgend, und über die zweite Temperiereinrichtung 5 (zwangs)konvektionsbasiert, weil mit Einbringung von Temperierfluid 6.2 in die Formwerkzeugkavität 3 erfolgend, sodass insgesamt eine im Vergleich sehr effiziente Mischtemperierung des Formwerkzeugs 1, d. h. insbesondere der Formwerkzeugkavität 3, realisierbar ist.

Über die zweite Temperiereinrichtung 6 ist eine bedarfsweise und damit flexible, insbesondere zusätzliche, Temperierung möglich, als über die Eigenschaften des über die zweite Temperiereinrichtung 6 in die Formwerkzeugkavität 3 einbringbaren bzw. eingebrachten Temperierfluids 6.2, d. h. insbesondere dessen thermische Eigenschaften, wie z. B. dessen Temperatur, und/oder dessen Strömungseigenschaften, wie z. B. dessen Strömungsgeschwindigkeit, gezielt eine bestimmte Menge an thermischer Energie in die Formwerkzeugkavität 3 einbringbar ist. Durch die im Weiteren beispielhaft näher erläuterte Anordnung jeweiliger Strömungsöffnungen 6.1 kann gegebenenfalls sogar gezielt eine lokale Einbringung einer bestimmten Menge an thermischer Energie in die Formwerkzeugkavität 3 realisiert werden.

Der Betrieb der ersten und der zweiten Temperiereinrichtung 5, 6 kann grundsätzlich gleichzeitig, teilweise gleichzeitig oder zeitlich aufeinander folgend erfolgen. Mithin können die beiden Temperiereinrichtungen 5, 6 gleichzeitig in Betrieb und/oder außer Betrieb genommen werden, oder eine Temperiereinrichtung 5, 6 vor einer anderen Temperiereinrichtung 5, 6 in Betrieb genommen werden und/oder eine Temperiereinrichtung 5, 6 vor einer anderen Temperiereinrichtung 5, 6 außer Betrieb genommen werden.

Zur Steuerung des Betriebs der Temperiereinrichtungen 5, 6 kann diesen eine hardware- und/oder softwaremäßig implementierte, mithin insbesondere computer-implementierte Steuereinrichtung 8 zugeordnet sein, welche eingerichtet ist, Steuerinformationen zur Steuerung des Betriebs der Temperiereinrichtungen 5, 6 zu erzeugen.

Die Steuereinrichtung 8 kann gleichermaßen zur Steuerung der über die jeweiligen Temperiereinrichtungen 5, 6 jeweils in die Formwerkzeugkavität 3 einbringbaren Menge an thermischer Energie eingerichtet sein. Dies kann z. B. über eine Steuerung der Leistungsaufnahme der jeweiligen Temperiereinrichtungen 5, 6 realisiert werden. Mithin kann sich aus der Summe der über die beiden Temperiereinrichtungen 5, 6 jeweils gesondert in die Formwerkzeugkavität 3 einbringbaren Mengen an thermischer Energie eine Gesamtmenge wie auch eine Verteilung der in die Formwerkzeugkavität 3 insgesamt einbringbaren thermischer Energie - diese reicht typischerweise aus, um ein gewünschtes Verbinden des Kunststoffpartikelmaterials unter Ausbildung eines Partikelschaumformteils zu ermöglichen - ergeben, welche über die Steuereinrichtung 8, gegebenenfalls in-situ, insbesondere auf Basis von formwerkzeugseitig vorhandenen Sensoren (nicht gezeigt) gelieferten Sensordaten, gezielt eingestellt bzw. verändert werden kann.

Aus den vorstehenden Ausführungen ergibt sich, dass die über die erste Temperiereinrichtung 5 in die Formwerkzeugkavität 3 einbringbare Menge an thermischer Energie gleich oder ungleich zu der über die zweite Temperiereinrichtung 6 in die Formwerkzeugkavität 3 einbringbaren Menge an thermischer Energie sein kann und umgekehrt. Insbesondere kann die über die erste Temperiereinrichtung 5 in die Formwerkzeugkavität 3 einbringbare Menge an thermischer Energie (Wärmemenge) größer als die über die zweite Temperiereinrichtung 6 in die Formwerkzeugkavität 3 einbringbaren Menge an thermischer Energie sein oder umgekehrt.

Nachfolgend werden unter konkreter Bezugnahme auf die Fig. beispielhaft mögliche Ausführungsbeispiele des Formwerkzeugs 1 näher beschrieben, anhand welcher insbesondere denkbare Anordnungsmöglichkeiten einer oder mehrerer Strömungsöffnungen 6.1, welche in allen Ausführungsbeispielen im Übrigen punkt- oder linienförmig ausgebildet sein kann, erkennbar sind:
Anhand der Fig. ist zunächst ersichtlich, dass eine oder mehrere Strömungsöffnungen 6.1 grundsätzlich in wenigstens einem Formwerkzeugkörperwandungsabschnitt 2a - 2d angeordnet oder ausgebildet sein können. Es ist dabei möglich, dass mehrere Strömungsöffnungen 6.1, insbesondere gleichmäßig verteilt, in dem wenigstens einen Formwerkzeugkörperwandungsabschnitt 2a - 2d angeordnet oder ausgebildet sind. Ebenso ist es möglich, dass in mehreren Formwerkzeugkörperwandungsabschnitten 2a - 2d jeweils wenigstens eine Strömungsöffnung 6.1 angeordnet oder ausgebildet ist, mithin mehrere Strömungsöffnungen 6.1 über mehrere Formwerkzeugkörperwandungsabschnitte 2a - 2d verteilt angeordnet oder ausgebildet sind. In allen Fällen kann die Anordnung einzelner, mehrerer oder sämtlicher Strömungsöffnungen 6.1 gezielt gewählt sein, um, gegebenenfalls bedarfsweise, gezielt thermische Energie in Formwerkzeugkavität 3 einbringen zu können. Derart kann beispielsweise eine gegebenenfalls lokalisierte Einbringung von thermischer Energie in schwer zu temperierbare Bereiche, wie z. B. in dickwandigen und/oder befülleinrichtungsnahen Bereichen eines Partikelschaumformteils, eingebracht werden.

In dem in Fig. 1 gezeigten Ausführungsbeispiel sind Strömungsöffnungen 6.1 z. B. in einer jeweiligen Formwerkzeugkörperwandungsabschnitten 2a - 2d angeordneten oder ausgebildeten Entlüftungsöffnungen 9.1 zur Entlüftung der Formwerkzeugkavität 3 angeordnet oder ausgebildet sein oder bilden selbst solche Entlüftungsöffnungen 9.1. Hierbei handelt es sich um eine hochintegrierte Möglichkeit der Anordnung oder Ausbildung entsprechender Strömungsöffnungen 6.1.

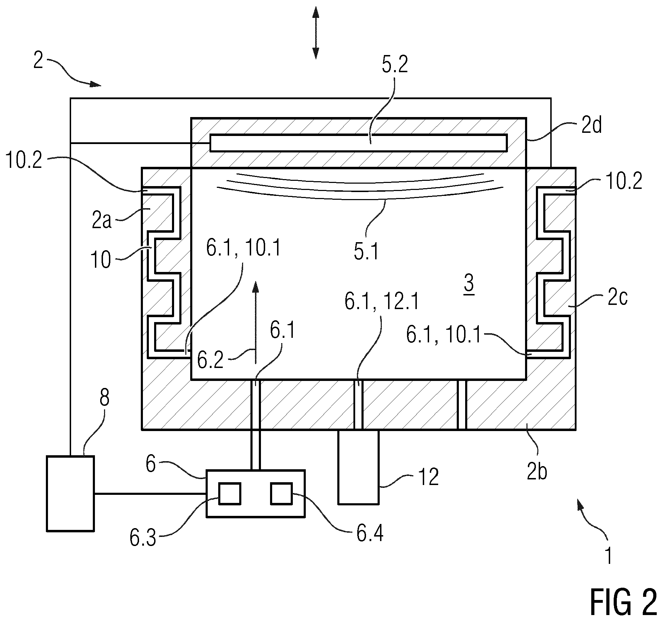

In dem in Fig. 2 gezeigten Ausführungsbeispiel sind Strömungsöffnungen 6.1 in in wenigstens einem Formwerkzeugkörperwandungsabschnitt angeordneten oder ausgebildeten Strömungskanalausgangsöffnungen 10.1 einer sich 2a - 2d zumindest abschnittsweise an oder in wenigstens einem Formwerkzeugkörperwandungsabschnitt 2a - 2d vorhandenen Strömungskanalstruktur 10 angeordnet oder ausgebildet oder bilden selbst solche Strömungskanalausgangsöffnungen 10.1. Hierbei handelt es sich ebenso um eine hochintegrierte Möglichkeit der Anordnung oder Ausbildung einer entsprechenden Strömungsöffnung 6.1.

Eine entsprechende von einem temperierbaren oder temperierten Temperierfluid 6.2 durchströmbare Strömungskanalstruktur 10 kann sich in wenigstens einer Raumrichtung und/oder -ebene durch den oder die jeweiligen Formwerkzeugkörperwandungsabschnitte 2a - 2d erstrecken.

Das durch die Strömungskanalstruktur 10 strömende Temperierfluid 6.2 kann bereits vor Eintritt in die Strömungskanalstruktur 10, z. B. durch eine gegebenenfalls ebenso einen Bestandteil der zweiten Temperiereinrichtung 6 bildende Heizeinrichtung (nicht gezeigt), aktiv erwärmt (worden) sein und/oder während des Durchströmens der Strömungskanalstruktur 10 durch einen Wärmeaustausch mit dem jeweilig erwärmten Formwerkzeugkörperwandungsabschnitt 2a - 2d, gegebenenfalls zusätzlich, passiv erwärmt werden. Die Strömungskanalstruktur 10 ist sonach eingerichtet, ein diese zwischen einer Strömungskanaleingangsöffnung 10.2 in die Strömungskanalstruktur 10 und einer Strömungskanalausgangsöffnung 10.1 durchströmendes Temperierfluid 6.2 durch Wärmeübertragung, insbesondere konvektionsfrei, zu temperieren. Bei einer entsprechenden Strömungskanalausgangsöffnung 10.1 kann es sich, wie in Fig. 2 gezeigt, insbesondere um eine entsprechende Strömungsöffnung 6.1 handeln.

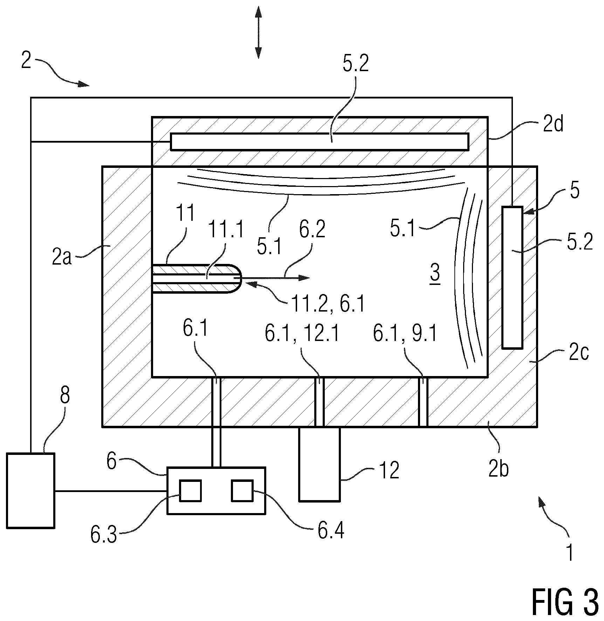

In dem in Fig. 3 gezeigten Ausführungsbeispiel sind Strömungsöffnungen 6.1 in einem sich von wenigstens einem Formwerkzeugkörperwandungsabschnitt 2a - 2d abragend in die Formwerkzeugkavität 3, insbesondere fingerartig bzw. -förmig, erstreckend angeordneten oder ausgebildeten Energieführungselement 11 angeordnet oder ausgebildet. Hierbei handelt es sich ebenso um eine hochintegrierte Möglichkeit der Anordnung oder Ausbildung einer entsprechenden Strömungsöffnung.

Ein entsprechendes Energieführungselement 11 kann im Bereich eines in die Formwerkzeugkavität 3 ragenden Abschnitts wenigstens eine mit einem kanalartigen bzw. - förmigen Innenraum 11.1 des Energieführungselements 11 kommunizierende Austrittsöffnung 11.2 aufweisen, über welche ein Temperierfluid 6.2 über das Energieführungselement 11 in die Formwerkzeugkavität 3 einbringbar ist. Bei einer entsprechenden Austrittsöffnung 11.2 kann es sich insbesondere um eine entsprechende Strömungsöffnung 6.1 handeln.

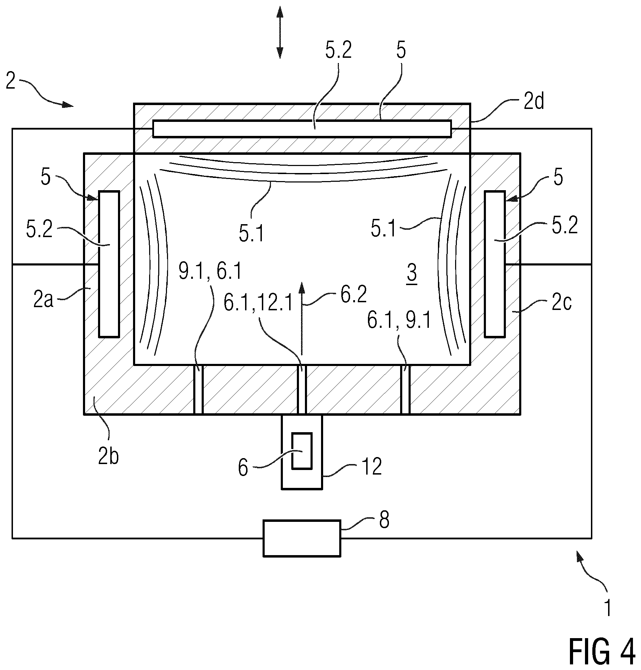

In dem in Fig. 4 gezeigten Ausführungsbeispiel ist eine Strömungsöffnung 6.1 in einer in einem Formwerkzeugkörperwandungsabschnitt 2a - 2d angeordneten oder ausgebildeten Befüllöffnung 12.1 zur Befüllung der Formwerkzeugkavität 3 mit Kunststoffpartikelmaterial angeordnet oder ausgebildet ist oder bildet selbst eine solche Befüllöffnung 12.1. Hierbei handelt es sich ebenso um eine hochintegrierte Möglichkeit der Anordnung oder Ausbildung einer entsprechenden Strömungsöffnung.

Die zweite Temperiereinrichtung 6 kann sonach einer Befülleinrichtung 12 des Formwerkzeugs 1 zugeordnet sein, welche zur Befüllung der Formwerkzeugkavität 3 mit vermittels des Formwerkzeugs 1 zu verarbeitendem Kunststoffpartikelmaterial eingerichtet ist.

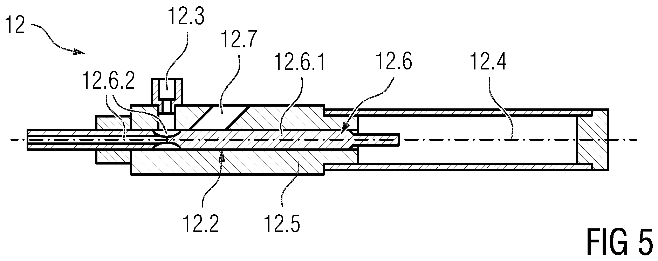

Die in Fig. 5 als längsgeschnittene Ansicht in einem Ausführungsbeispiel gezeigte Befülleinrichtung 12 kann wenigstens einen von einer Befüllströmung durchströmbaren, mit der Befüllöffnung 12.1 kommunizierenden Befüllkanal 12.2 aufweisen. Die zweite Temperiereinrichtung 6 kann eingerichtet sein, das Temperierfluid 6.2 über einen mit dem Befüllkanal 12.2 kommunizierenden, gegebenenfalls flanschartigen bzw. -förmigen, Zuströmanschluss 12.3 in den Befüllkanal 12.2 einzubringen. Der Zuströmanschluss 12.3 kann winklig, insbesondere spitz- oder stumpfwinklig, relativ zu einer durch den Befüllkanal 12.2 definierten Befüllkanalachse 12.4 angeordnet oder ausgerichtet sein und direkt oder indirekt mit den Befüllkanal 12.2 kommunizieren, sodass ein Temperierfluid 6.2 über den Zuströmanschluss 12.3 in den Befüllkanal 12.2 und weiter über die Befüllöffnung 12.1 in die Formwerkzeugkavität 3 strömen kann.

Anhand von Fig. 5 ist ferner ersichtlich, dass die Befülleinrichtung 12 wenigstens einen, insbesondere reversibel, zwischen wenigstens einer Offenstellung, in welcher ein Austritt von Kunststoffpartikelmaterial aus dem Befüllkanal 12.2 und damit ein Befüllen der Formwerkzeugkavität 3 mit Kunststoffpartikelmaterial möglich ist, und wenigstens einer in Fig. 5 gezeigten Verschlussstellung, in welcher ein Austritt von Kunststoffpartikelmaterial aus dem Befüllkanal 12.2 und damit ein Befüllen der Formwerkzeugkavität 3 nicht möglich ist, axial bezüglich einer in dem Ausführungsbeispiel mit der Befüllkanalachse 12.4 zusammenfallenden Zentralachse eines Gehäuses 12.5 der Befülleinrichtung 12, bewegbar gelagerter Verschlusskörper 12.6 umfassen. Dem Verschlusskörper 12.6 kann ein, z. B. motorischer, hydraulischer oder pneumatischer, Antrieb (nicht gezeigt) zugeordnet sein, über welchen sich eine den Verschlusskörper 12.6 in eine axiale Bewegung versetzende Antriebskraft erzeugen lässt.

Der Verschlusskörper 12.6 kann in allen Ausführungsbeispielen einen Grundabschnitt 12.6.1 mit einer (hohl)zylinderartigen bzw. -förmigen, mithin pinolenartigen bzw. -förmigen, Grundform aufweisen.

In Fig. 5 ist angedeutet, dass der Verschlusskörper 12.6 respektive der Grundabschnitt 12.6.1 mit einer von dem Temperierfluid durchströmbaren Strömungskanalstruktur 12.6.2 ausgebildet sein bzw. eine solche umfassen kann, welche z. B. durch äußere freiliegende oder innere nicht freiliegende Ausnehmungen, Bohrungen, Nuten, etc. in dem Grundabschnitt 12.6.1 angeordnet oder ausgebildet sein kann. Mithin kann die Strömungskanalstruktur 12.6.2 z. B. in Form eine Nut und/oder Ringnut zumindest abschnittsweise im Außenumfang des Grundabschnitts 12.6.1 des Verschlusskörpers 12.6 ausgebildet sein, und/oder in Form einer den Grundabschnitt 12.6.1 des Verschlusskörpers 12.6 durchsetzenden, axial verlaufenden Bohrung oder Nut innerhalb des Grundabschnitts 12.6.1 des Verschlusskörpers 12.6 ausgebildet sein.

Die Strömungskanalstruktur 12.6.2 mündet typischerweise in einem einer Befüllöffnung 12.1 zugewandten freien Ende des Verschlusskörpers 12.6, was nach Austritt eines Temperierfluids 6.2 aus der Strömungskanalstruktur 12.6.2 ein Zuführen des Temperierfluids über die Befüllöffnung 12.1 in die Formwerkzeugkavität 3 ermöglicht.

Der Vollständigkeit halber sei im Zusammenhang mit dem Ausführungsbeispiel gemäß Fig. 5 ergänzt, dass mit Bezugszeichen 12.7 ein Zuströmanschluss zum Zuführen von Kunststoffpartikelmaterial in den Befüllkanal 12.2 angedeutet ist.

Wenngleich in den Fig. nicht gezeigt, kann das Formwerkzeug 1 einen Bestandteil einer übergeordneten Vorrichtung zur Verarbeitung von Kunststoffpartikelmaterial zur Herstellung eines Partikelschaumformteils bilden. Eine entsprechende Vorrichtung umfasst sonach wenigstens ein Formwerkzeug 2 sowie dem Formwerkzeug 2 übergeordnete funktionelle und/oder konstruktive Einrichtungen, wie z. B. ein Anlagengestell zur Lagerung des Formwerkzeugs, eine Versorgungseinrichtung zur Versorgung des Formwerkzeugs mit einem oder mehreren Energieträgern, etc.

Ferner kann mit dem Formwerkzeug 1 ein Verfahren zur Verarbeitung von Kunststoffpartikelmaterial zur Herstellung eines Partikelschaumformteils implementiert werden. Das Verfahren zeichnet sich dadurch aus, dass zur Temperierung der Formwerkzeugkavität 3 eine erste Temperiereinrichtung 5 verwendet wird, welche eingerichtet ist, die zur Temperierung der Formwerkzeugkavität 3 erforderliche thermische Energie in die Formwerkzeugkavität 3 ausschließlich durch wenigstens einen Werkzeugkörperwandungsabschnitt 2a - 2d einzubringen; und zudem eine zweite Temperiereinrichtung 6 zur Temperierung der Formwerkzeugkavität 3 verwendet wird, welche eingerichtet ist, die zur Temperierung der Formwerkzeugkavität 3 erforderliche thermische Energie in die Formwerkzeugkavität 3 über ein durch über wenigstens eine Strömungsöffnung 6.1 in die Formwerkzeugkavität 3 strömendes Temperierfluid 6.1 einzubringen.

Das Verfahren kann zudem die folgenden Schritte umfassen: Einbringen wenigstens eines Kunststoffpartikelmaterials in die Formwerkzeugkavität 3 über eine Befülleinrichtung 12, Durchführen wenigstens einer einen Verbindungsvorgang des Kunststoffpartikelmaterials in der Formwerkzeugkavität 3 herbeiführenden Maßnahme durch Einbringen von thermischer Energie in das Kunststoffpartikelmaterial bzw. in die Formwerkzeugkavität 3 unter Ausbildung eines Partikelschaumformteils; und Entnehmen des Partikelschaumformteils aus der Werkzeugkavität 3.

Einzelne, mehrere oder sämtliche im Zusammenhang mit einem bestimmten Ausführungsbeispiel beschriebenen Merkmale können mit einzelnen, mehreren oder sämtlichen Merkmalen wenigstens eines weiteren Ausführungsbeispiel kombiniert werden.

## Patentansprüche

1. Formwerkzeug (1) zur Verarbeitung von Kunststoffpartikelmaterial zur Herstellung eines Partikelschaumformteils, umfassend wenigstens einen durch wenigstens einen Formwerkzeugkörperwandungsabschnitt (2a - 2d) begrenzte Formwerkzeugkavität (3) aufweisenden Formwerkzeugkörper (2), umfassend eine erste Temperiereinrichtung (5) zur Temperierung der Formwerkzeugkavität (3), wobei die erste Temperiereinrichtung (5) eingerichtet ist, zur Temperierung der Formwerkzeugkavität (3) erforderliche thermische Energie in die Formwerkzeugkavität (3), insbesondere konvektionsfrei, ausschließlich durch den wenigstens einen Formwerkzeugkörperwandungsabschnitt (2a - 2d) einzubringen; und
eine zweite Temperiereinrichtung (6) zur Temperierung der Formwerkzeugkavität (3), wobei die zweite Temperiereinrichtung (6) eingerichtet ist, zur Temperierung der Formwerkzeugkavität (3) erforderliche thermische Energie in die Formwerkzeugkavität (3) über ein durch über wenigstens eine Strömungsöffnung (6.1) in die Formwerkzeugkavität (3) strömendes Temperierfluid (6.2) einzubringen,
wobei die wenigstens eine Strömungsöffnung (6.1) in einer in dem wenigstens einen Formwerkzeugkörperwandungsabschnitt (2a - 2d) angeordneten oder ausgebildeten Strömungskanalausgangsöffnung (10.1) einer sich zumindest abschnittsweise an oder in dem wenigstens einen Formwerkzeugkörperwandungsabschnitt (2a - 2d) vorhandenen Strömungskanalstruktur (10) angeordnet oder ausgebildet ist oder eine solche bildet,
**dadurch gekennzeichnet, dass** die Strömungskanalstruktur (10) eingerichtet ist, ein diese zwischen einer Strömungskanaleingangsöffnung (10.2) und einer Strömungskanalausgangsöffnung (10.1) durchströmendes Temperierfluid (6.2) durch Wärmeübertragung, insbesondere konvektionsfrei, zu temperieren.

2. Formwerkzeug nach Anspruch 1, **dadurch gekennzeichnet, dass** die wenigstens eine Strömungsöffnung (6.1) in dem wenigstens einen Formwerkzeugkörperwandungsabschnitt (2a - 2d) angeordnet oder ausgebildet ist.

3. Formwerkzeug nach Anspruch 1 oder 2, **dadurch gekennzeichnet, dass** die wenigstens eine Strömungsöffnung (6.1) in einer in dem wenigstens einen Formwerkzeugkörperwandungsabschnitt (2a - 2d) angeordneten oder ausgebildeten Entlüftungsöffnung (9.1) zur Entlüftung der Formwerkzeugkavität (3) angeordnet oder ausgebildet ist oder eine solche bildet.

4. Formwerkzeug nach einem der vorhergehenden Ansprüche, **dadurch gekennzeichnet, dass** die die wenigstens eine Strömungsöffnung (6.1) in einem sich von wenigstens einem Formwerkzeugkörperwandungsabschnitt (2a - 2d) abragend in die Formwerkzeugkavität (3) erstreckend angeordneten oder ausgebildeten Energieführungselement (11) angeordnet oder ausgebildet ist.

5. Formwerkzeug nach einem der vorhergehenden Ansprüche, **dadurch gekennzeichnet, dass** die wenigstens eine Strömungsöffnung (6.1) in einer in dem wenigstens einen Formwerkzeugkörperwandungsabschnitt (2a - 2d) angeordneten oder ausgebildeten Befüllöffnung (12.1) zur Befüllung der Formwerkzeugkavität (3) mit Kunststoffpartikelmaterial angeordnet oder ausgebildet ist oder eine solche bildet.

6. Formwerkzeug nach einem der vorhergehenden Ansprüche, **dadurch gekennzeichnet, dass** die zweite Temperiereinrichtung (6) einer Befülleinrichtung (12) zugeordnet ist, welche zur Befüllung der Formwerkzeugkavität (3) mit vermittels des Formwerkzeugs (1) zu verarbeitendem Kunststoffpartikelmaterial eingerichtet ist.

7. Formwerkzeug nach Anspruch 6, **dadurch gekennzeichnet, dass** die Befülleinrichtung (12) wenigstens einen von einer Befüllströmung durchströmbaren, mit der wenigstens einen Befüllöffnung (12.1) kommunizierenden Befüllkanal (12.2) aufweist, wobei die zweite Temperiereinrichtung (6) eingerichtet ist, das Temperierfluid (6.2) über einen mit dem wenigstens einen Befüllkanal (12.2) kommunizierenden Zuströmanschluss (12.3) in den wenigstens eine Befüllkanal (12.2) einzubringen.

8. Formwerkzeug nach Anspruch 6 oder 7, **dadurch gekennzeichnet, dass** die Befülleinrichtung (12) eine zwischen wenigstens einer Offenstellung, in welcher ein Austritt von Kunststoffpartikelmaterial aus dem wenigstens einen Befüllkanal (12.2) möglich ist, und wenigstens einer Verschlussstellung, in welcher ein Austritt von Kunststoffpartikelmaterial aus dem wenigstens einen Befüllkanal (12.2) nicht möglich ist, insbesondere in dem wenigstens einen Befüllkanal (12.2), bewegbar gelagertes Verschlusskörper (12.6) umfasst, wobei
der Verschlusskörper (12.6) mit einer von dem Temperierfluid (6.2) durchströmbaren Strömungskanalstruktur (12.6.2) ausgebildet ist.

9. Formwerkzeug nach Anspruch 8, **dadurch gekennzeichnet, dass** die Strömungskanalstruktur (12.6.2) zumindest abschnittsweise im Außenumfang eines Grundabschnitts (12.6.1) des Verschlusskörpers (12.6) ausgebildet ist, und/oder die Strömungskanalstruktur (12.6.2) den Verschlusskörper (12.6) zumindest abschnittsweise, insbesondere in axialer Richtung bezüglich einer Längsachse des Grundabschnitts (12.6.1) des Verschlusskörpers (12.6), durchsetzend innerhalb des Grundabschnitts (12.6.1) des Verschlusskörpers (12.6) ausgebildet ist.

10. Formwerkzeug nach einem der vorhergehenden Ansprüche, **dadurch gekennzeichnet, dass** zumindest die zweite Temperiereinrichtung (6) eine Heizeinrichtung (6.3), welche zum Beheizen eines Temperierfluids (6.3) auf eine Temperatur oberhalb 25°C, insbesondere oberhalb 55°C, weiter insbesondere oberhalb 155°C, weiter oberhalb 195°C, eingerichtet ist, und eine Strömungserzeugungseinrichtung (6.4), welche zur Erzeugung einer Strömung des, gegebenenfalls über die Heizeinrichtung (6.3) beheizten, Temperierfluids in die Formwerkzeugkavität (3) umfasst.

11. Vorrichtung zur Verarbeitung von Kunststoffpartikelmaterial zur Herstellung eines Partikelschaumformteils, umfassend wenigstens ein Formwerkzeug (1) nach einem der vorhergehenden Ansprüche.

12. Verfahren zur Verarbeitung von Kunststoffpartikelmaterial zur Herstellung eines Partikelschaumformteils, **dadurch gekennzeichnet, dass** ein Formwerkzeug (1) nach einem der Ansprüche 1 bis 10 zur Durchführung des Verfahrens verwendet wird wobei zur Temperierung einer Formwerkzeugkavität (3) eine erste Temperiereinrichtung (5) verwendet wird, welche eingerichtet ist, zur Temperierung der Formwerkzeugkavität (5) erforderliche thermische Energie in die Formwerkzeugkavität (3), insbesondere konvektionsfrei, ausschließlich durch wenigstens einen Werkzeugkörperwandungsabschnitt (2a - 2d) einzubringen; und
eine zweite Temperiereinrichtung (6) zur Temperierung der Formwerkzeugkavität (3) verwendet wird, welche eingerichtet ist, zur Temperierung der Formwerkzeugkavität (3) erforderliche thermische Energie in die Formwerkzeugkavität (3) über ein durch über wenigstens eine Strömungsöffnung (6.1) in die Formwerkzeugkavität (3) strömendes Temperierfluid (6.2) einzubringen.

## Claims

1. A mold (1) for processing plastic particle material for producing a particle foam molding, comprising at least one mold body wall portion (2a - 2d) limited mold cavity (3) having a mold body (2), comprising a first tempering device (5) for tempering the mold cavity (3), wherein the first tempering device (5) is set up to introduce thermal energy required for tempering the mold cavity (3) into the mold cavity (3), in particular convection-free, exclusively through the at least one mold body wall portion (2a - 2d); and
a second tempering device (6) for tempering the mold cavity (3), wherein the second tempering device (6) is configured to introduce thermal energy required for tempering the mold cavity (3) into the mold cavity (3) via a tempering fluid (6.2) flowing through at least one flow opening (6.1) into the mold cavity (3), wherein
which at least one flow opening (6.1) is arranged or formed in at least one mold body wall portion (2a - 2d) or formed flow channel outlet opening (10.1) of a flow channel structure (10) present at least in sections at or in at least one mold body wall portion (2a - 2d) is arranged or formed or forms such a flow channel structure (10),
**characterized in that**
the flow channel structure (10) is arranged to temper a temperature control fluid (6.2) passing through it between a flow channel input opening (10.2) and a flow channel output opening (10.1) by heat transfer, in particular convection-free.

2. The mold according to claim 1, **characterized in that** the at least one flow opening (6.1) in the at least one mold body wall portion (2a - 2d) is arranged or formed.

3. The mold according to claim 1 or 2, **characterized in that** the at least one flow opening (6.1) is arranged or formed in the at least one mold body wall portion (2a - 2d) vent opening (9.1) for venting the mold cavity (3) or forms such.

4. The mold according to any one of the preceding claims, **characterized in that** the at least one flow opening (6.1) in a protruding from at least one mold body wall portion (2a - 2d) in the mold cavity (3) extendingly arranged or formed energy guide element (11) is arranged or formed.

5. The mold according to any one of the preceding claims, **characterized in that** the at least one flow opening (6.1) is arranged or formed in the at least one mold body wall portion (2a - 2d) filling opening (12.1) for filling the mold cavity (3) with plastic particle material or forms such.

6. The mold according to any one of the preceding claims, **characterized in that** the second temperature control device (6) is associated with a filling device (12), which is equipped for filling the mold cavity (3) with plastic particle material to be processed by means of the mold (1).

7. The mold according to claim 6, **characterized in that** the filling device (12) has at least one flow-through of a filling flow, with the at least one filling opening (12.1) communicating filling channel (12.2), wherein the second temperature control device (6) is arranged to introduce the temperature control fluid (6.2) via an inlet flow connection (12.3) communicating with at least one filling channel (12.2) into the at least one filling channel (12.2).

8. The mold according to claim 6 or 7, **characterized in that** the filling device (12) comprises one between at least one open position, in which an outlet of plastic particle material from the at least one filling channel (12.2) is possible, and at least one closure position, in which an outlet of plastic particle material from the at least one filling channel (12.2) is not possible, in particular in the at least one filling channel (12.2), movably mounted closure body (12.6), wherein
the closure body (12.6) is formed with a flow channel structure (12.6.2) which can be flowed through by the temperature control fluid (6.2).

9. The mold according to claim 8, **characterized in that** the flow channel structure (12.6.2) is formed at least partially in the outer periphery of a base portion (12.6.1) of the closure body (12.6), and / or the flow channel structure (12.6.2) the closure body (12.6) is formed at least partially, in particular in the axial direction with respect to a longitudinal axis of the base portion (12.6.1) of the closure body (12.6), interspersed within the base portion (12.6.1) of the closure body (12.6).

10. The mold according to one of the preceding claims, **characterized in that** at least the second temperature control device (6) a heating device (6.3), which is set up for heating a temperature control fluid (6.3) to a temperature above 25°C, in particular above 55°C, further in particular above 155°C, further above 195°C, and a flow generation device (6.4), which comprises for generating a flow of the, optionally heated via the heating device (6.3), temperature control fluid into the mold cavity (3).

11. A device for processing plastic particle material for producing a particle foam molding, comprising at least one molding tool (1) according to any one of the preceding claims.

12. A method for processing plastic particle material for producing a particle foam molding, **characterized in that** a mold (1) according to any one of claims 1 to 10 is used for carrying out the method, wherein for tempering a mold cavity (3) a first tempering device (5) is used, which is equipped to introduce the required thermal energy into the mold cavity (5) for tempering the mold cavity (3), in particular convection-free, exclusively through at least one mold body wall section (2a - 2d); and
A second tempering device (6) is used for tempering the mold cavity (3), which is configured to introduce thermal energy required for tempering the mold cavity (3) into the mold cavity (3) via a flowing through at least one flow opening (6.1) into the mold cavity (3) tempering fluid (6.2).

## Revendications

1. Outil de moulage (1) pour le traitement de matières particulaires en matière plastique en vue de la fabrication d'une pièce moulée en mousse à particules, comprenant au moins un corps d'outil de moulage (3) limité par au moins une section de paroi du corps de l'outil de moulage (2a - 2d), comprenant un premier dispositif de thermorégulation (5) pour la thermorégulation de la cavité de l'outil de moulage (3), le premier dispositif de thermorégulation (5) étant installé, injectant dans la cavité de l'outil de moulage (3) l'énergie thermique nécessaire à la thermorégulation de la cavité de l'outil de moulage (3), en particulier sans convection, exclusivement par l'intermédiaire d'au moins une section de paroi du corps de l'outil de moulage (2a - 2d); et
un deuxième dispositif de thermorégulation (6) pour la thermorégulation de la cavité de l'outil de moulage (3), le second dispositif de thermorégulation (6) étant installé pour introduire l'énergie thermique nécessaire à la thermorégulation de la cavité de l'outil de moulage (3) dans la cavité de l'outil de moulage (3) au moyen d'un fluide de thermorégulation (6.2) passant par au moins un orifice d'écoulement (6.1) dans la cavité de l'outil de moulage (3), étant entendu que:
au moins un orifice d'écoulement (6.1) est situé ou formé dans un orifice de sortie de canal d'écoulement (10.1) situé ou formé dans au moins une section de paroi de corps d'outil de moulage (2a - 2d) d'une structure de canal d'écoulement (10) située ou formée au moins par section sur ou dans au moins une section de paroi de corps d'outil de moulage (2a - 2d), **caractérisé en ce que**
la structure du canal d'écoulement (10) est configurée pour tempérer le fluide de contrôle de la température (6.2) traversant un orifice d'entrée du canal d'écoulement (10.2) et un orifice de sortie du canal d'écoulement (10.1) par transfert de chaleur, en particulier sans convection.

2. Outil de moulage selon la revendication 1, **caractérisé en ce qu'au** moins une ouverture d'écoulement (6.1) dans laquelle au moins une section de paroi du corps de l'outil de moulage (2a - 2d) est disposée ou formée.

3. Outil de moulage selon la revendication 1 ou 2, **caractérisé en ce qu'au** moins un orifice d'écoulement (6.1) est disposé ou formé dans un orifice d'aération (9.1) pour l'aération de la cavité de l'outil de moulage (3) disposé ou formé dans au moins une section de paroi du corps de l'outil de moulage (2a - 2d).

4. Outil de moulage selon l'une quelconque des revendications précédentes, **caractérisé en ce que** l'au moins un orifice d'écoulement (6.1) est disposé ou formé dans un élément de guidage d'énergie (11) disposé ou formé en s'étendant de manière remarquable dans la cavité de l'outil de moulage (11) d'au moins une section de paroi du corps de l'outil de moulage (2a - 2d).

5. Outil de moulage selon l'une quelconque des revendications précédentes, **caractérisé en ce qu'au** moins un orifice d'écoulement (6.1) est disposé ou formé dans un orifice de remplissage (12.1) disposé ou formé dans au moins une section de paroi de corps d'outil de moulage (2a - 2d) pour remplir la cavité de l'outil de moulage (3) avec du matériau particulaire en matière plastique, ou en constitue un.

6. Outil de moulage selon l'une quelconque des revendications précédentes, **caractérisé en ce que** le deuxième dispositif de thermorégulation (6) est affecté à un dispositif de remplissage (12) équipé pour remplir la cavité de l'outil de moulage (3) avec du matériau particulaire en plastique à traiter au moyen de l'outil de moulage (1).

7. Outil de moulage selon la revendication 6, **caractérisé en ce que** le dispositif de remplissage (12) comporte au moins un canal de remplissage (12.2) traversable par un flux de remplissage et communiquant avec au moins un orifice de remplissage (12.1), le second dispositif de thermorégulation (6) étant installé pour introduire le fluide de thermorégulation (6.2) dans au moins un canal de remplissage (12.2) par un raccord d'alimentation (12.3) communiquant avec au moins un canal de remplissage (12.2).

8. Outil de moulage selon la revendication 6 ou 7, **caractérisé en ce que** le dispositif de remplissage (12) comprend un corps de fermeture mobile (12.6) entre au moins une exposition dans laquelle une sortie de matière particulaire plastique est possible à partir d'au moins un canal de remplissage (12.2) et au moins une position de fermeture dans laquelle une sortie de matière particulaire plastique à partir d'au moins un canal de remplissage (12.2) n'est pas possible, en particulier dans laquelle au moins un canal de remplissage (12.2), étant entendu que:
le corps de l'obturateur (12.6) est conçu avec une structure de conduit d'écoulement (12.6.2) traversable par le fluide de thermorégulation (6.2).

9. Outil de moulage selon la revendication 8, **caractérisé en ce que** la structure du canal d'écoulement (12.6.2) est formée au moins par section dans le périmètre extérieur d'une section de base (12.6.1) du corps de la serrure (12.6) et/ou la structure du canal d'écoulement (12.6.2) est formée au moins par section dans le corps de la serrure (12.6), en particulier dans la direction axiale par rapport à un axe longitudinal de la section de base (12.6.1) du corps de la serrure (12.6), en traversant à l'intérieur de la section de base (12.6.1) du corps de la serrure (12.6).

10. Outil de moulage selon l'une quelconque des revendications précédentes, **caractérisé en ce qu'au** moins le deuxième dispositif de thermorégulation (6) comprend un dispositif de chauffage (6.3) équipé pour chauffer un fluide de thermorégulation (6.3) à une température supérieure à 25°C, en particulier au-dessus de 55°C, en particulier plus loin au-dessus de 155°C, plus loin au-dessus de 195°C, et un dispositif de génération d'écoulement (6.4) comprenant un dispositif de génération d'écoulement du fluide de thermorégulation, éventuellement chauffé par le dispositif de chauffage (6.3), dans la cavité de l'outil de moulage (3).

11. Dispositif pour le traitement de matières particulaires plastiques en vue de la fabrication d'une pièce moulée en mousse particulaire comprenant au moins un outil de moulage (1) selon l'une quelconque des revendications précédentes.

12. Procédé de traitement de matière particulaire plastique pour la fabrication d'une pièce moulée en mousse à particules, **caractérisé en ce qu'un outil de moulage (1) selon l'une** quelconque des revendications 1 à 10 est utilisé pour effectuer le procédé, dans lequel un premier dispositif de thermorégulation (5) est utilisé pour thermoréguler une cavité d'outil de moulage (3), qui est équipé pour introduire l'énergie thermique nécessaire à la thermorégulation de la cavité de l'outil de moulage (5) dans la cavité de l'outil de moulage (3), en particulier sans convection, exclusivement par au moins une section de paroi du corps de l'outil (2a - 2d); et
un deuxième dispositif de thermorégulation (6) est utilisé pour la thermorégulation de la cavité de l'outil de moulage (3), qui est prévu pour introduire l'énergie thermique nécessaire à la thermorégulation de la cavité de l'outil de moulage (3) dans la cavité de l'outil de moulage (3) au moyen d'un fluide de thermorégulation (6.2) passant par au moins un orifice d'écoulement (6.1) dans la cavité de l'outil de moulage (3).
